# EUROPÄISCHE PATENTANMELDUNG

(11) **EP 1 496 031 A1**
(43) Veröffentlichungstag der Anmeldung: **12.01.2005**
(21) Anmeldenummer: 04103027.1
(22) Anmeldetag: 29.06.2004
(51) Int. Cl.: C04B 35/56, C04B 35/58, B30B 15/00, B21B 15/00, B22F 3/00

(54) **Heisspresswerkzeug**

(30) Priorität: 30.06.2003 US 609982
(71) Anmelder: HILTI Aktiengesellschaft, 9494 Schaan (LI); 3-One-2 LLC, Voorhees, NJ 08043 (US)
(72) Erfinder: Akyüz, Devrim, 9425 Thal (CH); El-Raghy, Tamer, Voorhees, NJ 08043 (US)
(74) Vertreter: Wildi, Roland

(57) **Zusammenfassung**

Ein Heisspresswerkzeug (5) zur Herstellung von Teilen in einem Heisspressverfahren ist aus einem Werkstoff gefertigt, der eine Stoffverbindung aus der Gruppe **M**_{**n+1**}**AX**_{**n**} enthält, wobei:
- **M**: ein Element aus der Gruppe: Sc, Ti, V, Cr, Zr, Nb, Mo, Hf, Ta oder W ist;
- **A**: ein Element aus der Gruppe: Al, Si, P, S, Ga, Ge, As, Cd, In, Sn, Tl oder Pb ist und
- **X**: ein Element aus der Gruppe: C oder N ist.

## Beschreibung

### Technisches Gebiet

Die Erfindung betrifft ein Heisspresswerkzeug zur Herstellung von Werkzeugen mittels eines Heisspressverfahrens aus zumindest einem Werkstoff.

### Stand der Technik

Im Heisspressverfahren werden mit Heisspresswerkzeugen Werkstücke aus einem Pulver-Ausgangsmaterial mittels pulvermetallurgischen Verfahren bei hohem Druck und hoher Temperatur hergestellt. Bei den im Heisspressverfahren hergestellten Werkstücken handelt es sich beispielsweise um abrasive Segmente für Bohrkronen.

Heisspresswerkzeuge sind üblicherweise aus Grafit oder Hartmetall gefertigt. Nachteilig an den bekannten Heisspresswerkzeugen aus Grafit sind insbesondere der geringe Verschleisswiderstand und Bruchwiderstand sowie der geringe Oxidationswiderstand bei hohen Temperaturen. Nachteilig an den bekannten Heisspresswerkzeugen aus Hartmetallen sind insbesondere das hohe Gewicht des Heisspresswerkzeugs, dessen Bearbeitbarkeit, die begrenzte Temperaturbeständigkeit sowie der geringe Oxidationswiderstand. Da Heisspresswerkzeuge aus Grafit und aus Hartmetall einen geringen Oxidationswiderstand aufweisen, werden diese Heisspresswerkzeuge unter inerter Atmosphäre eingesetzt.

### Darstellung der Erfindung

Aufgabe der Erfindung ist es, ein Heisspresswerkzeug zu schaffen, das unter natürlichen atmosphärischen Bedingungen wirtschaftlich einsetzbar ist. Zudem soll das Heisspresswerkzeug einen hohen Verschleisswiderstand aufweisen und leicht zu bearbeiten sein. Des Weiteren soll das Heisspresswerkzeug ein geringes Gewicht aufweisen und wirtschaftlich herstellbar sein.

Die Aufgabe ist durch die Merkmale des unabhängigen Anspruchs gelöst. Vorteilhafte Weiterbildungen sind in den Unteransprüchen dargelegt.

Gemäss der Erfindung ist das Heisspresswerkzeug aus zumindest einem Werkstoff gefertigt, der zumindest eine Stoffverbindung aus der Gruppe **M**_{**n+1**}**AX**_{**n**} enthält, wobei:
**M** ein Element aus der Gruppe: Sc, Ti, V, Cr, Zr, Nb, Mo, Hf, Ta oder W ist;
**A** ein Element aus der Gruppe: Al, Si, P, S, Ga, Ge, As, Cd, In, Sn, Tl oder Pb ist und
**X** ein Element aus der Gruppe: C oder N ist.

Die Verbindung **M**_{**n+1**}**AX**_{**n**} und deren Herstellung in Labormengen sind seit 1967 bekannt. Die Variable n beträgt vorzugsweise 1 bis 3. Aus der US 5,942,455 ist die Herstellung dieser Verbindung in Bulk-Mengen offenbart.

Die Gruppe weist aufgrund der keramischen Stoffverbindung eine weitgehende Temperaturunabhängigkeit bezüglich der mechanischen Eigenschaften auf. Des Weiteren weist ein aus dieser Gruppe hergestelltes Heisspresswerkzeug einen hohen Verschleisswiderstand auf, wobei das Heisspresswerkzeug einfach bearbeitbar ist. Wesentlich ist zudem der Oxidationswiderstand auch bei hohen Temperaturen, der eine Verwendung des erfindungsgemässen Heisspresswerkzeugs unter natürlichen atmosphärischen Bedingungen ermöglicht. Zudem kann das aus dieser Gruppe hergestelltes Heisspresswerkzeug, je nach Wahl der Elemente und der Variablen n eine elektrische Leitfähigkeit, ähnlich einem Hartmetall aufweisen.

Die Werkstoffe für das Heisspresswerkzeug werden in Pulverform mittels, dem Fachmann an sich bekannten pulvermetallurgischen Verfahren in die gewünschte Form des Heisspresswerkzeugs gebracht. Das Heisspresswerkzeug wird beispielsweise direkt in der gewünschten Form und Abmessungen hergestellt ("net-shaped"). Durch die einfache Bearbeitbarkeit des zumindest einen Werkstoffes aus der Stoffgruppe **M**_{**n+1**}**AX**_{**n**} kann das Heisspresswerkzeug in die definitive Form und die gewünschten Abmessungen auch mittels eines zusätzlichen Bearbeitungsschritts gefertigt werden. Das Heisspresswerkzeug ist beispielsweise durch Elektroerodieren, schleifen, drehen, sägen, usw. bearbeitbar.

Die Wahl der Elemente und die Grösse des stöchiometrischen Koeffizienten von **M**_{**n+1**}**AX**_{**n**} ist im Wesentlichen durch die bevorzugten Eigenschaften des erfindungsgemässen Heisspresswerkzeugs bestimmt und wird entsprechend diesen ausgewählt.

Vorteilhaft ist die Variable n = 2 sowie M = Ti, A = Si und X = C, womit sich aus der Gruppe **M**_{**n+1**}**AX**_{**n**} die Verbindung Ti₃SiC₂ ergibt. Ein aus dieser Verbindung hergestelltes Heisspresswerkzeug zeichnet sich insbesondere durch seine guten mechanischen Eigenschaften aus.

Vorteilhaft ist die Variable n=1 sowie M = Ti, A = Al und X = C, womit sich aus der Gruppe **M**_{**n+1**}**AX**_{**n**} die Verbindung Ti₂AlC ergibt. Ein aus dieser Verbindung hergestelltes Heisspresswerkzeug zeichnet sich insbesondere durch seinen hohen Oxidationswiderstand aus.

Vorteilhaft ist die Variable n=3 sowie M = Ti, A = Al und X = N, womit sich aus der Gruppe **M**_{**n+1**}**AX**_{**n**} die Verbindung Ti₄AlN₃ ist. Ein aus dieser Verbindung hergestelltes Heisspresswerkzeug zeichnet sich insbesondere durch seinen hohen elektrischen Widerstand aus.

Vorzugsweise ist das Heisspresswerkzeug im Wesentlichen vollständig aus dem Werkstoff gefertigt, der die Stoffgruppe **M**_{**n+1**}**AX**_{**n**} enthält. Das Heisspresswerkzeug kann aber beispielsweise auch nur teilweise aus der Verbindung gefertigt sein. Bei der Verwendung mehrere Werkstoffe zur Herstellung des Heisspresswerkzeugs macht der Werkstoff, der die Stoffgruppe **M**_{**n+1**}**AX**_{**n**} enthält, an den Aussenflächen des Heisspresswerkzeugs den Hauptanteil, beispielsweise bezogen auf die Volumen-% der Gesamtmenge der Werkstoffe in diesem Bereich aus.

Bevorzugt weist das Heisspresswerkzeug eine Aussenschicht aus der Stoffgruppe **M**_{**n+1**}**AX**_{**n**} auf, die auf einen Grundkörper aufgebracht ist. Der Grundkörper ist beispielsweise aus einem Hartmetall gefertigt, auf den die Aussenschicht in einer ausreichenden Dicke aufgebracht ist. Die Dicke der Aussenschicht ist durch die erforderlichen Eigenschaften und den vorhandenen Rahmenbedingungen bei der Verwendung des erfindungsgemässen Heisspresswerkzeugs bestimmt. Bei dieser Ausführungsform des Heisspresswerkzeug s kann nach der Abnutzung der Aussenschicht eine neue Aussenschicht auf den Grundkörper aufgebracht werden. Der Grundkörper kann mehrmals verwendet werden.

Vorzugsweise ist das Heisspresswerkzeug als Stempel und/oder als Hülse ausgebildet. Die Hülse kann zur Schaffung eines becherförmigen Heisspresswerkzeugs mit einem Boden versehen sein. Des Weiteren können weitere Bestandteile eines Heisspressrahmens, wie z. B. Matrizen, Trennwände, Stifte, Kerne, Schrauben, usw., aus zumindest dem Werkstoff der Stoffgruppe **M**_{**n+1**}**AX**_{**n**} gefertigt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: einen schematischen Detailschnitt durch einen Heisspressrahmen mit erfindungsgemässen Heisspresswerkzeugen;
- Fig. 2: eine perspektivische Darstellung des in Fig. 1 gezeigten Stempels;
- Fig. 3: eine perspektivische Darstellung der in Fig. 1 gezeigten Hülse;
- Fig. 4: eine perspektivische Darstellung einer Variante des in Fig. 2 gezeigten Stempels; und
- Fig. 5: eine perspektivische Darstellung auf weitere Ausführungsbeispiel e des erfindungsgemässen Heisspresswerkzeugs.

Grundsätzlich sind in den Figuren gleiche Teile mit den gleichen Bezugszeichen versehen.

### Wege zur Ausführung der Erfindung

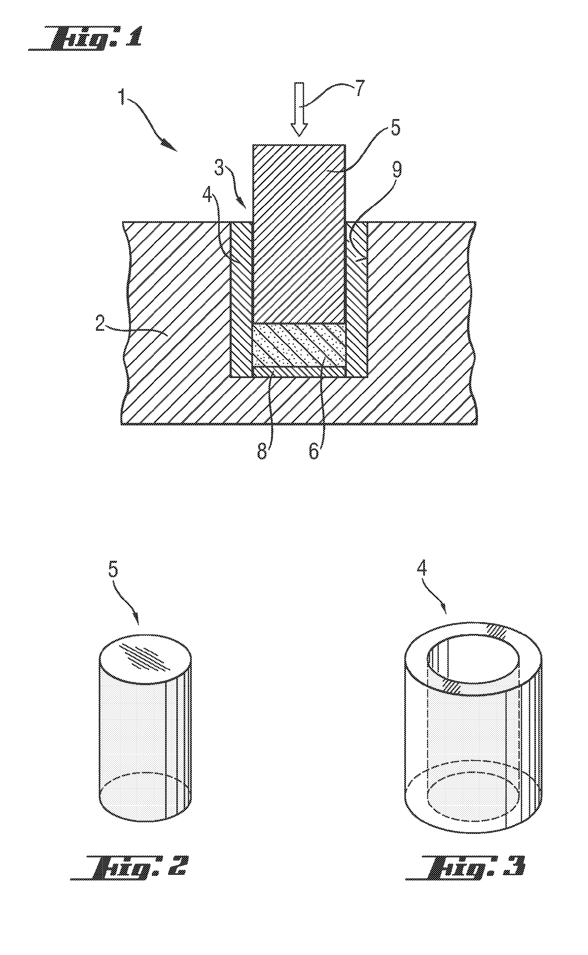

Fig. 1 zeigt einen schematischen Detailschnitt durch einen Heisspressrahmen mit erfindungsgemässen Heisspresswerkzeugen. Der Heisspressrahmen 1 umfasst eine Matrize 2 mit mehreren Ausnehmungen (hier ist nur die Ausnehmung 3 dargestellt). In der Ausnehmung 3 ist als erstes Heisspresswerkzeug die Hülse 4 angeordnet, in der als zweites Heisspresswerkzeug ein Stempel 5 vorgesehen ist. In der Ausnehmung 3 ist ein Bodenteil 8 vorgesehen, das als drittes Heisspresswerkzeug dient. Damit ist das herzustellende Werkstück gesamthaft von erfindungsgemässen Heisspresswerkzeugen umgeben, welche die Herstellung des Werkstücks 6 unter natürlichen atmosphärischen Bedingungen ermöglicht. In einer Variante dazu (hier nicht dargestellt) kann die Hülse 4 das Bodenteil 8 aufweisen und somit becherförmig ausgebildet sein.

Das im Heisspressverfahren herzustellende Werkstück 6 wird beispielsweise in Pulverform, kaltgepresst oder vorgesintert in die Hülse 4 eingebracht. Der Stempel 5 wird mit hohem Druck und bei hoher Temperatur in Richtung des Pfeils 7 in Richtung der Matrize 2 verschoben, bis das herzustellende Werkstück 6 ausreichend verdichtet ist. Im Wesentlichen handelt es sich um ein pulvermetallurgisches Verfahren zur Herstellung des Werkstücks 6. Ist die Matrize 2 im Wesentlichen aus einem Werkstoff der Stoffgruppe **M**_{**n+1**}**AX**_{**n**} gefertigt, kann auf die Anordnung der Hülse 4 in der Ausnehmung 3 verzichtet werden und der Stempel 5 gleitet direkt entlang der Innenflächen 9 der Ausnehmung 3.

Der Stempel 5, die Hülse 4 und gegebenenfalls die Matrize 2 sind ebenfalls in einem pulvermetallurgischen Verfahren aus einem Werkstoff gefertigt, der die Stoffgruppe **M**_{**n+1**}**AX**_{**n**} enthält. Die erfindungsgemässen Heisspresswerkzeuge werden bevorzugt direkt in der endgültigen Form gefertigt. Die erfindungsgemässen Heisspresswerkzeuge können auch in einer Grundform gefertigt werden und mittels weiteren Bearbeitungsschritten, wie Schneiden, Schleifen, usw., in die gewünschte Form gebracht werden.

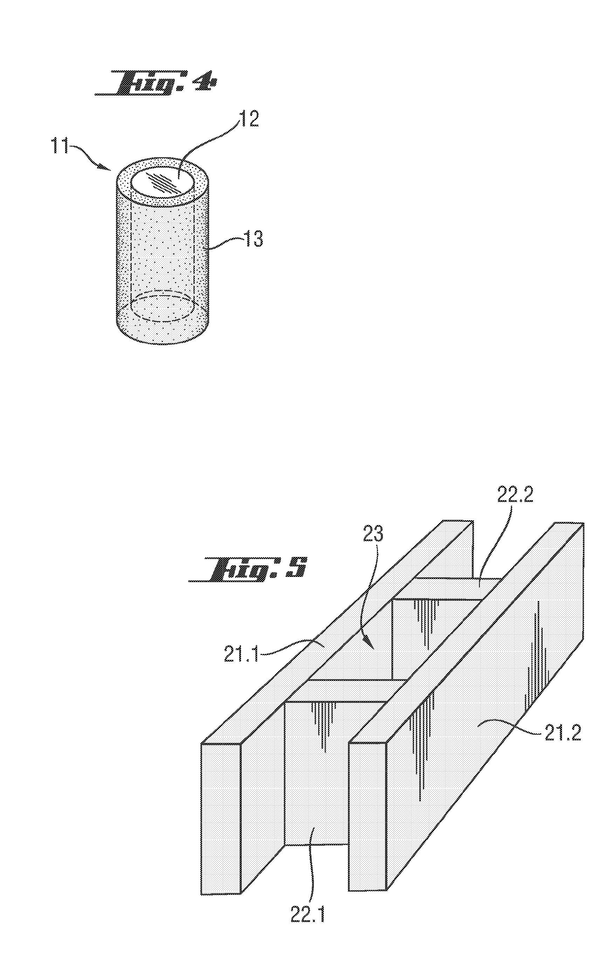

In der Fig. 2 ist in einer perspektivischen Darstellung der in Fig. 1 gezeigte Stempel dargestellt. Der Stempel 5 weist eine kreiszylindrische Ausgestaltung auf und ist in seinen Aussenabmessungen auf die Innenabmessung der Hülse 4, beziehungsweise auf die Innenabmessung der Ausnehmung 3 abgestimmt. Zur Gewährleistung des hohen Oxidationswiderstandes und den guten Eigenschaften bei hohen Temperaturen sowie des guten Verschleisswiderstandes ist der Stempel 5 hauptsächlich aus dem Werkstoff der Stoffgruppe **M**_{**n+1**}**AX**_{**n**} gefertigt.

In Fig. 3 ist in einer perspektivische n Darstellung die in Fig. 1 gezeigte Hülse 4 dargestellt. Die Hülse 4 weist eine rohrförmige Ausgestaltung auf und ist in ihren Abmessungen auf die Aussenabmessung des Stempels 5 und auf die Innenabmessung der Ausnehmung 3 abgestimmt. Zur Gewährleistung der Gebrauchstauglichkeit der Hülse 4 als Heisspresswerkzeug im Heisspressrahmen ist auch die Hülse 4 bevorzugt im Wesentlichen aus dem Werkstoff der Stoffgruppe **M**_{**n+1**}**AX**_{**n**} gefertigt.

In Fig. 4 ist in einer perspektivischen Darstellung eine Variante des in Fig. 2 gezeigten Stempels dargestellt. Der Stempel 11 weist einen kreiszylindrischen Grundkörper 12 auf, der mit einer, im Wesentlichen aus einem Werkstoff der Stoffgruppe **M**_{**n+1**}**AX**_{**n**} gefertigte Aussenschicht 13 versehen ist. Der Grundkörper 12 ist beispielsweise aus einem Hartmetall gefertigt.

Eine perspektivische Darstellung auf weitere Ausführungsbeispiele des erfindungsgemässen Heisspresswerkzeugs ist in Fig. 5 gezeigt. Das Heisspresswerkzeug umfasst Wandabschnitte 21.1 und 21.2, die mittels Trennwände 22.1 und 22.2 voneinander beabstandet angeordnet sind. In den geschaffenen Freiraum 23 kann beispielsweise ein quaderförmiger Stempel (hier nicht dargestellt) eindringen.

Die erfindungsgemässen Heisspresswerkzeuge zeichnen sich insbesondere durch ihre Materialeigenschaften und Flexibilität der Formgebung der Werkzeuge aus. Zudem lassen sich die erfindungsgemässen Heisspresswerkzeuge nach deren Fertigung bearbeiten und Spezialformen von Heisspresswerkzeugen lassen sich wirtschaftlich herstellen. Die Heisspresswerkzeuge sind beispielsweise mittels Schrauben verbunden, die ebenfalls aus einem, die Stoffgruppe **M**_{**n+1**}**AX**_{**n**} enthaltenden Werkstoff hergestellt sind.

Der verwendete Werkstoff zur Herstellung des erfindungsgemässen Heisspresswerkzeugs enthält beispielsweise den folgenden Verbindungen: Ti₃SiC₂, Ti₂AlC oder Ti₄AlN₃.

## Patentansprüche

1. Heisspresswerkzeug zur Herstellung von Werkstücken mittels eines Heisspressverfa h-rens aus zumindest einem Werkstoff, **dadurch gekennzeichnet, dass** der zumindest eine Werkstoff eine Stoffverbindung aus der Gruppe **M**_{**n+1**}**AX**_{**n**} enthält, wobei:
**M** ein Element aus der Gruppe: Sc, Ti, V, Cr, Zr, Nb, Mo, Hf, Ta oder W ist;
**A** ein Element aus der Gruppe: Al, Si, P, S, Ga, Ge, As, Cd, In, Sn, Tl oder Pb ist und
**X** ein Element aus der Gruppe: C oder N ist.

2. Heisspresswerkzeug nach Anspruch 1, **dadurch gekennzeichnet, dass** der Stoff aus der Gruppe **M**_{**n+1**}**AX**_{**n**} Ti₃SiC₂ ist.

3. Heisspresswerkzeug nach Anspruch 1, **dadurch gekennzeichnet, dass** der Stoff aus der Gruppe **M**_{**n+1**}**AX**_{**n**} Ti₂AlC ist.

4. Heisspresswerkzeug nach Anspruch 1, **dadurch gekennzeichnet, dass** der Stoff aus der Gruppe **M**_{**n+1**}**AX**_{**n**} Ti₄AlN₃ ist.

5. Heisspresswerkzeug nach einem der Ansprüche 1 bis 4, **dadurch gekennzeichnet, dass** das Heisspresswerkzeug (4, 5; 21.1, 21.2, 22.1, 22.2) im Wesentlichen aus dem Werkstoff aus der Stoffgruppe **M**_{**n+1**}**AX**_{**n**} gefertigt ist.

6. Heisspresswerkzeug nach einem der Ansprüche 1 bis 5, **dadurch gekennzeichnet, dass** das Heisspresswerkzeug (11) eine Aussenschicht (13) aus der Stoffgruppe **M**_{**n+1**}**AX**_{**n**} aufweist, die auf einen Grundkörper (12) aufgebracht ist.

7. Heisspresswerkzeug nach einem der Ansprüche 1 bis 6, **dadurch gekennzeichnet, dass** das Heisspresswerkzeug als Stempel (5; 11) und/oder als Hülse (4) ausgebildet ist.
